(19) Europäisches Patentamt / European Patent Office / Office européen des brevets

(11) **EP 2 042 863 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(51) Int Cl.:
*G01N 30/20* (2006.01)  *G01N 30/86* (2006.01)

(21) Anmeldenummer: **08008889.1**

(22) Anmeldetag: **17.10.2006**

(54) **Analyse von Stoffgemischen**

Analysis of material mixtures

Analyse de mélanges de matière

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.10.2005 DE 102005050114**

(43) Veröffentlichungstag der Anmeldung:
**01.04.2009 Patentblatt 2009/14**

(62) Dokumentnummer(n) der früheren Anmeldung(en) nach Art. 76 EPÜ:
**06805440.2 / 1 994 403**

(73) Patentinhaber: **Studiengesellschaft Kohle MbH**
**45470 Mülheim an der Ruhr (DE)**

(72) Erfinder: **Trapp, Oliver**
**45470 Mühlheim an der Ruhr (DE)**

(56) Entgegenhaltungen:
**EP-A- 0 685 738**     **DE-A1- 3 001 425**
**DE-A1- 10 133 774**   **DE-A1- 19 817 017**
**GB-A- 2 268 096**     **US-A- 5 954 862**

EP 2 042 863 B1

**EP 2 042 863 B1**

**Beschreibung**

Die vorliegende Erfindung betrifft Verfahren und Vorrichtungen zur Erzeugung von gepulsten Stoffgemischen, insbesondere komplexen chemischen und/oder biochemischen Stoffgemischen, vorzugsweise zur Nutzung mit Verfahren zur Analyse von diesen Stoffgemischen,

Bei diesen Verfahren wird ein zu analysierendes Stoffgemisch einer Trenneinrichtung zugeführt, durch chemisch und/oder physikalisch bewirkten Transport werden die Stoffe des zu analysierenden Stoffgemisches seitens der Trenneinrichtung voneinander getrennt und die voneinander getrennten Stoffe werden seitens einer Auswerteeinrichtung erfasst.

Im Stand der Technik sind verschiedene Verfahren und Vorrichtungen zur qualitativen und/oder quantitativen Analyse, also zur Bestimmung von Art und/oder Menge der Bestandteile eines Stoffgemisches bekannt, die chemische, physikalische und/oder biochemische Methoden und verschiedene Trenntechniken nutzen.

Zur Identifikation und/oder Quantifizierung von chemischen Verbindungen in komplexen chemischen und/oder biochemischen zu analysierenden Stoffgemischen, insbesondere bei der Analyse komplexer chemischer Stoffgemische aus Hochdurchsatzverfahren, insbesondere aus parallelisierten chemischen Reaktoren oder der Untersuchung kombinatorischer Substanzbibliotheken, und/oder bei der Analyse von natürlichen Stoffen, Proteinen, Peptiden und/oder dergleichen biochemisch relevanten, beispielsweise bei einer sogenannten Genom-, Proteom-, Metabolom-, und/oder Transskriptomanalyse zu analysierenden Verbindungen, kommen insbesondere chromatographische oder elektrophoretische Trennverfahren und/oder - einrichtungen zum Einsatz, wobei die zu analysierenden Stoffgemische sequentiell und/oder parallel analysiert werden.

Die Trenneinrichtungen sind zur Analyse ferner in der Regel mit einer Auswerteeinrichtung zur Erfassung beziehungsweise Detektion der voneinander getrennten Stoffe des Stoffgemischs gekoppelt beziehungsweise verbunden. Seitens der Auswerteeinrichtungen beziehungsweise Detektoren kommen dabei insbesondere spektroskopische und/oder spektrometrische Detektionstechniken zum Einsatz, im Zusammenhang mit Genom-, Proteom-, Metabolom-, und/oder Transskriptomanalysen insbesondere spektroskopische Detektoren, beispielsweise bei der Kernresonanzspektroskopie (NMR) oder der Infrarotspektroskopie (IR), und massenspektrometrische (MS) Detektoren zum Einsatz.

Die bisher bekannten Verfahren und Vorrichtungen zur Analyse von Stoffgemischen, insbesondere komplexen chemischen und/oder biochemischen Stoffgemischen, weisen verschiedene Nachteile auf. So sind die bisher bekannten, insbesondere hochauflösende spektroskopische und/oder spektrometrische Techniken nutzenden Verfahren und Vorrichtungen bedingt durch große Analysendauern sowie geringen Detektionsempfindlichkeiten beziehungsweise schlechten Signal-zu-Rausch-Verhältnissen (SNRs) der zum Einsatz kommenden Auswerteeinrichtungen limitiert. In der Regel ist dabei eine Analyse von sehr geringen Stoffmengen bei der Erfassung des gesamten spektroskopischen oder spektrometrischen Bereichs eines zu analysierenden Stoffgemischs nicht möglich. Darüber hinaus ist der Durchsatz an zu analysierenden Stoffgemischen insbesondere aufgrund der bisher erforderlichen großen Analysedauern stark eingeschränkt. So erfordert beispielsweise die qualitative und quantitative Analyse der Edukte und Produkte eines 7-mal-7-Parallelreaktors etwa 24,5 h bei einer Analysendauer von jeweils etwa 30 min.

Beispielsweise sind im Stand der Technik aus der DE3001425 A1 eine Vorrichtung und ein Verfahren zur Probenaufgabe mit einer Kammer einer Nadel zur Zuführung wenigstens eines Stoffgemisches, einen Glasmantel, einer Heizeinrichtung, einem Kanal für die Einführung eines Trägergases, eine Abzugsleitung und eine Gaschromatographensäule bekannt.

Der vorliegenden Erfindung liegt in Anbetracht dieses Standes der Technik die Aufgabe zugrunde, die Analyse von Stoffgemischen unter Meidung der beschriebenen Nachteile zu verbessern, insbesondere hinsichtlich Analysendauer, Durchsatz und Auflösung.

Zur technischen Lösung des Analyseverfahrens wird mit der vorliegenden Erfindung ein Verfahren zur Erzeugung von gepulsten Stoffgemischen, insbesondere komplexen chemischen und/oder biochemischen Stoffgemischen bereitgestellt, wobei wenigstens ein Stoffgemisch über wenigstens zwei Kapillarleitungen wenigstens zwei Kanälen kontinuierlich zugeführt wird, das Stoffgemisch in wenigstens einem in den wenigstens zwei Kanälen angeordneten desaktivierten Glasrohr verdampft wird, die wenigstens zwei Kanäle über ein jeweiliges schaltbares Druckventil mit einer Gasströmung beaufschlagt wird und mit der Gasströmung beaufschlagtes verdampftes Stoffgemisch aus den wenigstens zwei Kanälen in eine Nadel injiziert wird, wobei die jeweiligen schaltbaren Druckventile der Kanäle synchron und/oder separat voneinander gesteuert werden.

Dem Analyseverfahren liegt die Erkenntnis zugrunde, dass durch Nutzung eines zu analysierenden Stoffgemischs mit Pulsen einer eindeutigen binären Sequenz, also aus einer beliebigen Folge von Nullen ("0") und Einsen ("1") bestehenden Sequenz, ein mit einer Kennung, insbesondere nach Art eines Strichcodes, versehenes zu analysierende Stoffgemisch gegeben ist, so dass gleichzeitig unterschiedliche Stoffgemische - quasi nach Art eines Multiplexing-Verfahrens, ähnlich der US 2004/0144918 A1 für Anwendungen in der Spektroskopie (FT-NMR, FT-IR) und der Massenspektrometrie (FT-ICR-MS und HT-TOF-MS) - der Analyse zugeführt werden können, wodurch sich insbesondere die Analysendauer, der zu analysierende Stoffgemischdurchsatz und die Auflösung der analysierten Stoffe verbessern lassen. So sind vorteilhafterweise mehrere Stoffgemischanalysen durchführbar, wodurch insbesondere das Signal-zu-Rausch-Verhältnis (SNR) weiter verbessert wird.

Vorteilhafterweise werden die Pulse des zu analysierenden Stoffgemischs zeitlich und räumlich voneinander getrennt der Trenneinrichtung zugeführt.

In einer vorteilhaften Ausgestaltung des Analyseverfahrens wird die eindeutige binäre Sequenz mit einem binären Zufallsgenerator erzeugt. In einer weiteren vorteilhaften Ausgestaltung der Analyseverfahrens wird die eindeutige binäre Sequenz aus einer mit einer wiederholenden Sequenz unterteilten, mit einem binären Zufallsgenerator erzeugten Sequenz gebildet. Durch diese Maßnahmen wird so eine sogenannte Pseudozufallssequenz erzeugt und vorteilhafterweise sichergestellt, dass sich Sequenz der Pulse des zu analysierenden Stoffgemischs nicht wiederholt. Insgesamt wird so die Eindeutigkeit der binären Pulssequenz verbessert.

Gemäß einem weiteren vorteilhaften Vorschlag des Analyseverfahrens besteht die eindeutige binäre Sequenz aus $2^n$ Elementen, mit $0 \leq n \leq \infty$ (zumindest theoretisch), vorzugsweise mit $5 \leq n \leq 128$, besonders bevorzugt mit $7 \leq n \leq 14$. Das Analyseverfahren macht sich die Erkenntnis zunutze, dass n Analysen in derselben Zeit wie eine konventionelle Analyse durchgeführt werden können. Dies hat zur Folge, dass das Signal-zu-Rausch-Verhältnis (SNR) verbessert werden kann in einem Bereich von $\sqrt{\frac{n}{2}} \geq SNR \geq \frac{\sqrt{n}}{2}$. Die maximal erreichbare Verbesserung des Signal-zu-Rausch-Verhältnisses (SNRs) beträgt dementsprechend $\frac{\sqrt{n}}{2}$. länger die verwendeten Pulssequenzen sind, desto größer wird der Vorteil beim Signal-zu-Rausch-Verhältnis (SNR), der sogenannte Felgett-Vorteil, und dementsprechend verbessert die Auflösung und die Eindeutigkeit der Zuordnung der Signale der von der Auswerteeinheit erfassten Stoffe.

Eine weitere Ausgestaltung des Analyseverfahrens ist gekennzeichnet durch ein Modulationsintervall mit einer Sequenz- beziehungsweise Pulsintervalldauer ($\Delta t$) in einem Bereich von etwa 0,25 s bis etwa 120 s, vorzugsweise in einem Bereich von etwa 1 s bis etwa 20 s. Eine weitere vorteilhafte Ausgestaltung des Analyseverfahrens sieht eine Pulsdauer ($\Delta t_{Puls}$) in einem Bereich von etwa 1 ms bis etwa 1 s, vorzugsweise in einem Bereich von etwa 1 ms bis etwa 10 ms, vor. So sind hochpräzise gepulste Sequenzen des zu analysierenden Stoffgemischs erzeugbar, die insbesondere zu einer weiteren Verbesserung des Durchsatzes und der Auflösung führen.

Vorteilhafterweise erfolgt die Stofferfassung der Auswerteeinrichtung synchronisiert mit der Stoffgemischzuführung. In einer bevorzugten Ausgestaltung des Analyseverfahrens wird die Auswerteeinrichtung mit einer Erfassungsdauer betrieben, die der Pulsintervalldauer ($\Delta t$) oder einem ganzzahligen Bruchteil der Pulsintervalldauer ($\Delta t$) entspricht. Dadurch ist vorteilhafterweise ein sogenanntes Oversampling der Pulssequenz realisierbar. So können vorteilhafterweise seitens der Auswerteeinrichtung zur Erfassung der Stoffe des zu analysierenden Stoffgemisches Detektoren eingesetzt werden, die im Vergleich zu der Pulsintervalldauer ($\Delta t$) mit geringeren Erfassungszeiten, das heißt insbesondere langsamer, betrieben werden. So ist vorteilhafterweise eine Erfassung von Stoffen des zu analysierenden Stoffgemisches im gesamten Detektionsbereich des Detektors der Auswerteeinrichtung ermöglicht.

Eine besonders vorteilhafte Ausgestaltung des Analyseverfahrens sieht vor, dass die seitens der Auswerteeinrichtung erfassten Stoffe mit der eindeutigen binären Sequenz der Pulse des zu analysierenden Stoffgemischs mathematisch dekonvoliert werden, vorzugsweise durch eine zweidimensionale mathematische Dekonvolution. Vorteilhafterweise werden im Rahmen der Dekonvolution die von der Auswerteeinrichtung erfassten Stoffe einer Hadamard-Transformation mit der eindeutigen binären Sequenz unterzogen werden, aus dem Ergebnis der Hadamard-Transformation die Konzentrationsverteilungen der von der Auswerteeinrichtung erfassten Stoffe bestimmt werden und die Konzentrationen der einzelnen von der Auswerteeinrichtung erfassten Stoffe bestimmt werden, vorzugsweise durch Lösung eines von den Konzentrationsverteilungen, den Konzentrationen der einzelnen von der Auswerteeinrichtung erfassten Stoffe und der von der Auswerteeinrichtung erfassten Stoffe gebildeten linearen Gleichungssystems nach den Konzentrationen der einzelnen von der Auswerteeinrichtung erfassten Stoffe. Durch eine zweidimensionale mathematische Dekonvolution mit der bekannten Pulssequenz des zu analysierenden Stoffgemischs sind so vorteilhafterweise die jeweiligen Spektren der Stoffe des Stoffgemischs in Abhängigkeit ihrer jeweiligen Retentionszeit zur Identifikation und Quantifizierung bestimmbar, wobei vorteilhafterweise gegenüber bisher bekannten, insbesondere kontinuierlich betriebenen Analyseverfahren ein verbessertes Signal-zu-Rausch-Verhältnis (SNR) und eine verbessere Nachweisgrenze erzielt wird.

Die Hadamard-Transformation (HT) ermöglicht vorteilhafterweise ein Multiplexing des zu analysierenden Stoffgemisches mit der vorteilhafterweise bis zu drei diskrete Zustände ("-1", "0" "+1") kodiert werden können. Das zu analysierende Stoffgemisch wird dabei als Wellen- oder Teilchenpaket mit der binären Pseudozufallssequenzen (Modulationssequenz) kodiert. Anstelle der Hadamard-Matrix kann vorteilhafterweise eine daraus abgeleitete Simplex-Matrix verwendet werden, die lediglich zwei diskrete Zustände ("0", "1") kodiert und durch einfache Umformung aus der Hadamard-Matrix wie folgt erhalten werden kann:

Streichen der
1. Zeile und 1. Reihe

Modulationssequenz

$$H := \begin{bmatrix} 1 & 1 & 1 & 1 & 1 & 1 & 1 \\ -1 & -1 & -1 & 1 & -1 & 1 & 1 \\ -1 & -1 & 1 & -1 & 1 & 1 & -1 \\ -1 & 1 & -1 & 1 & 1 & -1 & -1 \\ 1 & -1 & 1 & 1 & -1 & -1 & -1 \\ -1 & 1 & 1 & -1 & -1 & -1 & 1 \\ 1 & 1 & -1 & -1 & -1 & 1 & -1 \\ 1 & -1 & -1 & -1 & 1 & -1 & 1 \end{bmatrix}$$

Austausch
−1 zu 1
1 zu 0

$$S := \begin{bmatrix} 1 & 1 & 1 & 0 & 1 & 0 & 0 \\ 1 & 1 & 0 & 1 & 0 & 0 & 1 \\ 1 & 0 & 1 & 0 & 0 & 1 & 1 \\ 0 & 1 & 0 & 0 & 1 & 1 & 1 \\ 1 & 0 & 0 & 1 & 1 & 1 & 0 \\ 0 & 0 & 1 & 1 & 1 & 0 & 1 \\ 0 & 1 & 1 & 1 & 0 & 1 & 0 \end{bmatrix}$$

Simplex Matrix

Die mathematische Dekonvolution erfolgt vorteilhafterweise durch Multiplikation des erhaltenen Signals mit der inversen Hadamard-Matrix beziehungsweise Simplex-Matrix:

$$I_{Rohdaten} \; x \; S^{-1} = I_{Daten}$$

Vorteilhafterweise nutzt die Trenneinrichtung chromatographische und/oder elektrophoretische Trennverfahren und ist vorzugsweise ein Gaschromatograph oder ein überkritischer Flüssigchromatograph.

In einer weiteren vorteilhaften Ausgestaltung umfasst die Auswerteeinrichtung wenigstens einen Detektor und/oder wenigstens einen spektroskopischen und/oder spektrometrischen Detektor.

Zur Erzeugung von gepulsten Stoffgemischen, insbesondere komplexen chemischen und/oder biochemischen Stoffgemischen, wird verfahrensgemäß vorgeschlagen, dass wenigstens ein Stoffgemisch über wenigstens zwei Kapillarleitungen wenigstens zwei Kanälen kontinuierlich zugeführt wird, das Stoffgemisch in wenigstens einem in den wenigstens zwei Kanälen angeordneten desaktivierten Glasrohr verdampft wird, die wenigstens zwei Kanäle über ein jeweiliges schaltbares Druckventil mit einer Gasströmung beaufschlagt wird und mit der Gasströmung beaufschlagtes verdampftes Stoffgemisch aus den wenigstens zwei Kanälen in eine Nadel injiziert wird, wobei die jeweiligen schaltbaren Druckventile der Kanäle synchron und/oder separat voneinander gesteuert werden.

Vorteilhafterweise wird das schaltbare Druckventil mit Pulsen einer eindeutigen binären Sequenz geschaltet. Erfindungsgemäß sind dabei Schaltzeiten des schaltbaren Druckventils in einem Bereich von etwa 1 ms bis etwa 1 s, vorzugsweise in einem Bereich von etwa 1 ms bis etwa 10 ms, vorgesehen..

Eine weitere Ausgestaltung der Erfindung sieht eine Beaufschlagung des verdampften Stoffgemisches mit einer Veränderungen der Zusammensetzung des verdampften Stoffgemisches ausschließenden Gasströmung eines Gases und/oder eines Gasgemisches vor, besonders bevorzugt mit einem inerten Gas und/oder inerten Gasgemisch.

Vorteilhafterweise wird der wenigstens eine Kanal und/oder die Nadel durch Beaufschlagung mit der Gasströmung gespült, vorzugsweise gesteuert über das schaltbare Druckventil des Kanals.

Eine Ausgestaltung der Erfindung mit wenigstens zwei in die Nadel injizierenden Kanälen sieht vor, dass die jeweiligen schaltbaren Druckventile der Kanäle synchron und/oder separat voneinander gesteuert werden.

Vorteilhafterweise wird die Verdampfung des Stoffgemisches gesteuert, vorzugsweise durch Steuerung der Temperatur einer Heizeinrichtung zur Verdampfung des Stoffgemisches. Vorteilhafterweise wird der Druck der Gasströmung gesteuert. Durch diese Maßnahmen, einzeln und/oder in Kombination miteinander, ist insbesondere eine weitere Verbesserung der Präzision der Pulssequenzen und deren definierten Schaltzeiten erzielbar.

Zur Erzeugung von gepulsten Stoffgemischen, insbesondere komplexen chemischen und/oder biochemischen Stoffgemischen, wird eine Vorrichtung vorgeschlagen, die gekennzeichnet ist, durch wenigstens einen Kanal mit wenigstens einer Kapillarleitung zur Zuführung wenigstens eines Stoffgemisches in den Kanal, mit wenigstens einem im Kanal angeordneten desaktivierten Glasrohr zur Verdampfung des wenigstens einen dem Kanal zugeführten Stoffgemisches im Kanal mit einer Heizeinrichtung und mit einem schaltbaren Druckventil zum Anschluss des Kanals an eine Gaszuleitung zur Beaufschlagung des wenigstens einen verdampften Stoffgemisches mit einer Gasströmung, und einem sich an den wenigstens einen Kanal strömungstechnisch anschließenden Ausgang zum Anschluss einer Gasableitung, vorzugsweise einer Injektionsnadel.

In einer weiteren Ausgestaltung der Erfindung nimmt die Einstromrichtung der Gasströmung zur Beaufschlagung des wenigstens einen verdampften Stoffgemisches über das schaltbare Druckventil zur Längserstreckungsrichtung des Kanals einen Winkel in einem Bereich von etwa 0° bis etwa 180° ein. Vorteilhafterweise verläuft die Einstromrichtung der Gasströmung zur Beaufschlagung des wenigstens einen verdampften Stoffgemisches im wesentlichen senkrecht zur Längserstreckungsrichtung des Kanals. Eine weitere Ausgestaltung der Erfindung sieht vor, dass die Gaszuleitung über das schaltbare Druckventil etwa mittig der Längserstreckungsrichtung des Kanals an den Kanal anschließbar ist. Durch die erfindungsgemäßen Ausgestaltungen, einzeln und/oder in Kombination miteinander, ist sicherstellbar, dass Störungen der zu erzeugenden Pulssequenz durch die Beaufschlagung erzeugt werden oder generiert werden. Dadurch ist insbesondere die Präzision der zu erzeugenden Pulssequenz und der einzelnen Pulse verbesserbar.

Eine weitere Ausgestaltung der Erfindung sieht vor, dass die Heizeinrichtung zumindest im Bereich des im Kanal angeordneten desaktivierten Glasrohrs angeordnet ist, wobei die Heizeinrichtung vorzugsweise in Form einer austauschbar anordbaren Heizkartusche ausgebildet ist. Die erfindungsgemäße Ausgestaltung erlaubt so insbesondere ein einfaches und schnelles Austauschen der Heizeinrichtung. Eine weitere vorteilhafte Ausgestaltung der Erfindung sieht die Nutzung wenigstens eines Sensorikelementes zur Erfassung der Temperatur der Heizeinrichtung und/oder der Verdampfung vor, wobei die erfasste Temperatur vorzugsweise zur Steuerung der Heizeinrichtung nutzbar ist. Dadurch ist insbesondere die Präzision der zu erzeugenden Pulssequenz und der einzelnen Pulse weiter steuerbar und verbesserbar.

Vorteilhafterweise ist das Druckventil der erfindungsgemäßen Vorrichtung mit Schaltzeiten in einem Bereich von etwa 1 ms bis etwa 1 s, vorzugsweise in einem Bereich von etwa 1 ms bis etwa 10 ms, schaltbar.

Die wenigstens eine Kapillarleitung der erfindungsgemäßen Vorrichtung ist vorteilhafterweise aus Metall, Glas und/oder Fused-Silica-Glas. Die erfindungsgemäße Vorrichtung ist vorteilhafterweise aus Metall und/oder einer metallischen Legierung gefertigt, vorzugsweise einstückig.

Vorteilhafterweise werden das erfindungsgemäße Verfahren und die erfindungsgemäße Vorrichtung zur Erzeugung von gepulsten Stoffgemischen, insbesondere komplexen chemischen und/oder biochemischen Stoffgemischen, mit einem Analyseverfahren genutzt, wobei das zu analysierende Stoffgemisch über die Nadel der Trenneinrichtung zugeführt wird beziehungsweise zuführbar ist.

Zur Erzeugung von gepulsten Stoffgemischen, insbesondere komplexen chemischen und/oder biochemischen Stoffgemischen, wird verfahrensgemäß ferner vorgeschlagen, dass ein kontinuierlicher Stoffgemischstrom nacheinander durch wenigstens zwei voneinander getrennte Kammern geführt wird, wobei in der ersten Kammer eine Fokussierung des Stoffgemischstroms und in der zweiten Kammer eine Modulation des fokussierten Stoffgemischstroms mit Pulsen einer eindeutigen binären Sequenz erfolgt.

Vorteilhafterweise erfolgt die Fokussierung des Stoffgemischstroms und/oder die Modulation des fokussierten Stoffgemischstroms mittels eines Kalt- und Warmgasstroms, wobei der Stoffgemischstrom zunächst ausgefroren und anschließend durch schnelles Aufheizen wieder freigesetzt wird.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:

Fig.1:  in einer schematischen Prinzipdarstellung ein Ausführungsbeispiel für den prinzipiellen Aufbau einer Anordnung zur Durchführung der Analyse von Stoffgemischen;

Fig. 2:  in einer schematischen Prinzipdarstellung ein weiteres Ausführungsbeispiel für den prinzipiellen Aufbau einer Anordnung zur Durchführung der Analyse von Stoffgemischen;

Fig. 3:  in einer schematischen Darstellung den Aufbau eines Ausführungsbeispiels der Vorrichtung zur Erzeugung von gepulsten Stoffgemischen;

Fig. 4a bis 4c:  eine schematische Seiten-, Front- und Schnittansicht der Vorrichtung nach Fig. 3;

Fig. 5:  in einer schematischen Darstellung den Aufbau eines weiteren Ausführungsbeispiels der Vorrichtung zur Erzeugung von gepulsten Stoffgemischen;

Fig. 6a bis 6c:  eine schematische Seiten-, Front- und Schnittansicht der Vorrichtung nach Fig. 5;

Fig. 7:  in einem Diagramm eine gemessene Injektionsstabilität einer eindeutigen binären Sequenz eines gepulsten Stoffgemisches mit 127 Pulsen;

Fig. 8:  einen vergrößerten Ausschnitt des Diagramms nach Fig. 7

Fig. 9:  in einem Diagramm eine gemessene Injektionsstabilität einer eindeutigen binären Sequenz eines gepulsten Stoffgemisches mit 2048 Pulsen;

Fig.10: in einer schematischen Darstellung Injektionsabschnitte zu analysierender Stoffgemische innerhalb einer eindeutigen binären Sequenz;

Fig.11: in einem Diagramm die erfasste Konzentrationsänderung eines zu analysierenden Stoffgemischs;

Fig. 12: in einer schematischen Darstellung den Ablauf der Analyse und

Fig. 13: in einer weiteren schematischen Darstellung den Ablauf der Analyse.

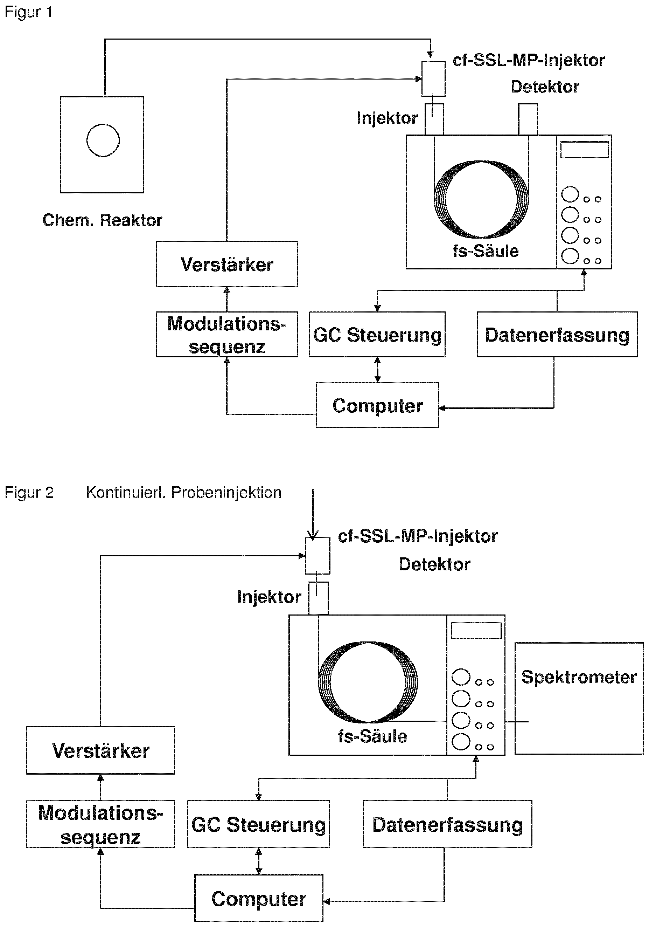

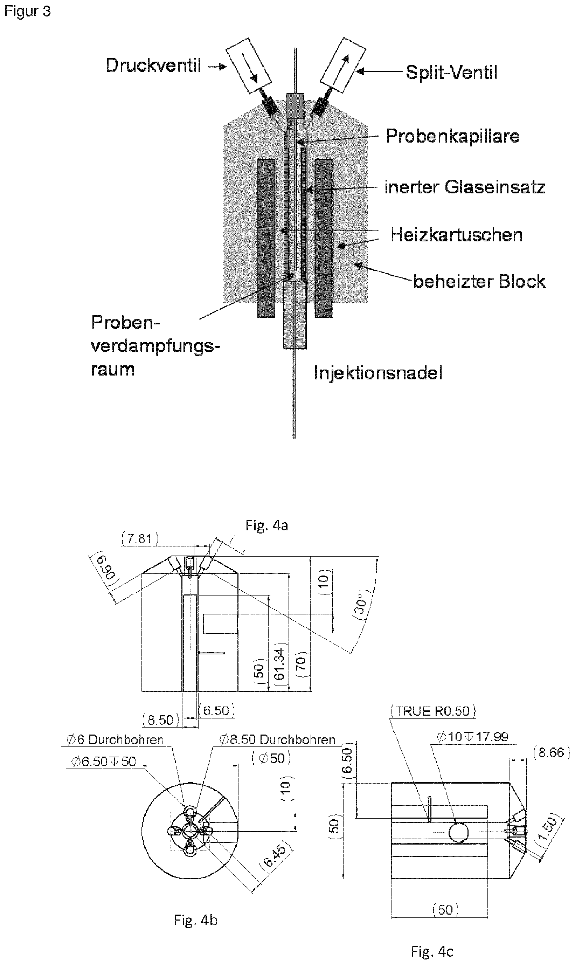

Fig. 1 und Fig. 2 zeigen jeweils in einer schematischen Prinzipdarstellung ein Ausführungsbeispiel für den prinzipiellen Aufbau einer Anordnung zur Durchführung der Analyse von Stoffgemischen, insbesondere komplexen chemischen und/oder biochemischen Stoffgemischen. Dabei wird ein von einem chemischen Reaktor kommendes, zu analysierendes Stoffgemisch als kontinuierlicher Strom einer Vorrichtung (Injektor) zur Erzeugung von gepulsten Stoffgemischen zugeführt. Ausführungsbeispiele entsprechender Vorrichtungen zur Erzeugung von gepulsten Stoffgemischen sind in Fig. 3 bis Fig. 7 dargestellt und werden nachfolgend im Zusammenhang mit diesen näher erläutert. Der kontinuierliche Stoffgemischstrom des zu analysierenden Stoffgemischs wir bei dem Ausführungsbeispiel gemäß Fig. 1 von einem chemischen Reaktor geliefert. Die von der Vorrichtung zur Erzeugung von gepulsten Stoffgemischen erzeugten Stoffgemischpulse werden dann auf die Trennsäule (fused-silica-Säule (fs-Säule)) eines als Trenneinrichtung dienenden Gaschromatographen (GC) gegeben. Seitens des Gaschromatographen (GC) werden die die Stoffe des zu analysierenden Stoffgemisches voneinander getrennt. Die voneinander getrennten Stoffe werden dann seitens einer Auswerteeinrichtung erfasst. Die Auswerteeinrichtung ist bei dem in Fig. 1 dargestellten Ausführungsbeispiel durch einen Detektor des Gaschromatographen ausgebildet. Bei dem in Fig. 2 dargestellten Ausführungsbeispiel ist die Auswerteeinrichtung ein mit dem Gaschromatographen (GC) gekoppeltes Spektrometer. Die Komponenten der Anordnung, das heißt eine Steuereinrichtung (GC-Steuerung) des Gaschromatographen (GC), eine Datenerfassungseinrichtung und eine von der Vorrichtung (Injektor) zur Erzeugung von Stoffgemischpulsen als Modulator genutzte, mit einem Verstärker verbundene Einrichtung (Modulationssequenz) zur Erzeugung einer eindeutigen binären Sequenz der Stoffgemischpulse, werden vorliegend von einer mit den Komponenten verbundenen Recheneinrichtung (Computer) gesteuert.

Zur Durchführung der Analyse von Stoffgemischen mittels Multiplexing ist eine präzise Kontrolle der Injektion des Stoffgemisches (Analyten) in das chromatographische Trennsystem erforderlich. Diese Kontrolle umfasst insbesondere eine präzise und definierte zeitliche Kontrolle des Zeitintervall zwischen aufeinanderfolgenden Injektionen des gepulsten Stoffgemisches in die Trenneinrichtung (Gaschromatographen) sowie der Injektionsdauer innerhalb eines solchen Zeitintervalls. Ferner ist eine präzise und definierte Kontrolle der Quantität des Stoffgemisches (Probenquantität) erforderlich.

Die bisher im Stand der Technik zur Erzeugung von gepulsten Stoffgemischen beispielsweise im Bereich der Gas- und Flüssigchromatographie oder der Kapillarelektrophorese zum Einsatz kommenden Ventilschaltungen sind langsam und die Steuerung des Probenvolumens ist insbesondere durch Probenschleifen unflexibel. Ferner treten durch eine direkt mit dem chromatographischen System gekoppelt Ventilschaltung Druckstöße auf, die zu sogenannten Systempeaks im Chromatogramm führen, da kein kontinuierlicher Fluss im chromatographischen System auftritt.

Die in Fig. 1 und Fig. 2 genutzte Vorrichtung (Injektor cf-SSL-MP-Injektor) zur Erzeugung von gepulsten Stoffgemischen ist vorzugsweise für die Gaschromatographie (GC) (vgl. Fig. 1 und Fig. 2) durch einfache Montage auf einen vorhanden split/splitless Injektor des Gaschromatographen anschließbar. Eine entsprechende Anwendung durch einfachen Anschluss ist vorteilhafterweise auch für eine hier nicht explizit dargestellte überkritische Flüssigchromatographie (SFC) gegeben.

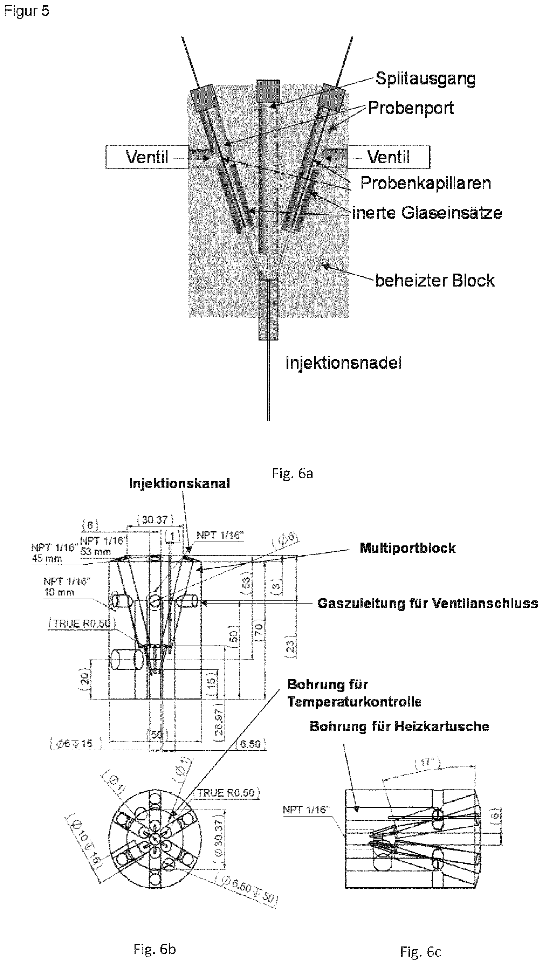

Fig. 3 und Fig. 4a bis 4c sowie Fig. 5 und Fig. 6a bis 6c zeigen jeweils ein Ausführungsbeispiel für eine Vorrichtung (Injektor, cf-SSL-MP-Injektor) zur Erzeugung von gepulsten Stoffgemischen. Mit dem Ausführungsbeispiel gemäß Fig. 3 und Fig. 4a bis 4c ist ein zu analysierendes Stoffgemisch in eine Trenneinrichtung injizierbar. Das Ausführungsbeispiel gemäß Fig. 5 und Fig. 6a bis 6c erlaubt ein geschaltetes injizieren von bis zu sieben Stoffgemischen.

Die Vorrichtungen (kontinuierliche split/splittless-Multiplexinginjektoren (cf-SSL-MP-Injektor)) bestehen jeweils aus einem beheizbaren Metallblock (Probenblock), der mit Bohrungen für die jeweiligen Injektionskanäle - bei dem Ausführungsbeispiel gemäß Fig. 3 und Fig. 4a bis 4c ein Injektionskanal und bei dem Ausführungsbeispiel gemäß Fig. 5 und Fig. 6a bis 6c sieben Injektionskanäle (Probenkanäle) -. versehen ist. Die Injektionskanäle nehmen Kapillarleitungen des jeweils zu analysierenden Stoffgemischs, also der jeweiligen Probenquelle, vorzugsweise von einem parallelisierten Reaktor, Multititerplatten oder dergleichen Quelle, auf. Die zu analysierenden Stoffgemische (Analyten) werden durch die vorliegend aus Metall, Glas und/oder Fused-Silica-Glas bestehenden Kapillarleitungen kontinuierlich zugeführt und im Probenblock in einem desaktivierten Glasrohr verdampft. Der Probenblock verfügt dazu über Heizvorrichtungen und Thermoelemente zur exakten Temperaturkontrolle. Überschüssige verdampfte zu analysierende Stoffgemische (Analyte) werden über Spülleitungen abgeführt (Rückspülung). Jeder Injektionskanal (Probenkanal) verfügt über eine Gaszuleitung, die mit einem schnellen Druckventil mit Schaltzeiten im Millisekunden-Bereich steuerbar ist.

Vorteilhafterweise ist diese Gaszuleitung auch als Spülleitung des jeweiligen Probenkanals nutzbar. Die Spülung kann dabei auch mit dem steuerbaren beziehungsweise schaltbaren Druckventil kontrolliert werden. Als Gase können sämtliche inerte Gase und Gasgemische verwendet werden, die zu keiner Veränderung der Analytzusammensetzung führen. Die jeweiligen Gaszuleitungen können einzeln und oder synchron gesteuert werden. Durch einen gezielten kurzen Druckstoß erfolgt die Injektion des Analytgemisches in eine Nadel, die in den vorhandenen split/splittless Injektor der Trenneinrichtung, bei Fig. 1 und Fig. 2 des Gaschrömatographen, eingeführt wird beziehungsweise ist und dort durch den Injektor beheizt wird.

Die jeweilige Ausgestaltung der Vorrichtungen zur Erzeugung von gepulsten Stoffgemischen gemäß Fig. 3 und Fig. 4a bis 4c beziehungsweise Fig. 5 und Fig. 6a bis 6c, also mit einem Injektionskanal (Probenkanal) bei dem Ausführungsbeispiel nach Fig. 3 und Fig. 4a bis 4c beziehungsweise mit sieben Injektionskanäle (Probenkanäle) bei dem Ausführungsbeispiel gemäß Fig. 5 und Fig. 6a bis 6c, erlaubt zudem über die Möglichkeit der Spülung der Injektionsnadel durch einen Trägergasfluss, vorliegend im Bereich von ml/min, der Trenneinrichtung (Gaschromatographen). Dadurch wird eine permanente Spülung erreicht und eine Kontamination der unterschiedlichen mittels Multiplexing zu analysierenden Stoffgemische (Analytgemische) vermieden. Ein solcher zusätzlicher Splittfluss ist vorliegend an den jeweiligen Injektionsventilen (Rückspülung) und/oder an einem im Heizblock integrierten Splitausgang einstellbar. Der gesamte Splittfluss ergibt sich aus der Summe der jeweiligen Flüsse an den Ventilen. Das Volumen zwischen Injektionsnadel und Verdampfungsraum der jeweiligen Kapillaren ist in einer solchen Anordnung vorteilhafterweise minimiert, insbesondere um Totvolumen zu vermeiden. Da ferner durch diese Ausgestaltung der Vorrichtung der Druckstoß außerhalb des Injektors des Trenneinrichtung (Gaschromatographen) stattfindet und durch die Druckregelung der Trenneinrichtung (Gaschromatographen) bzw. des Splitsystems abgefangen wird, treten vorteilhafterweise keine Druckschwankungen bei der Trennung durch die Vorrichtung (cf-SSL-MP-Injektor) auf.

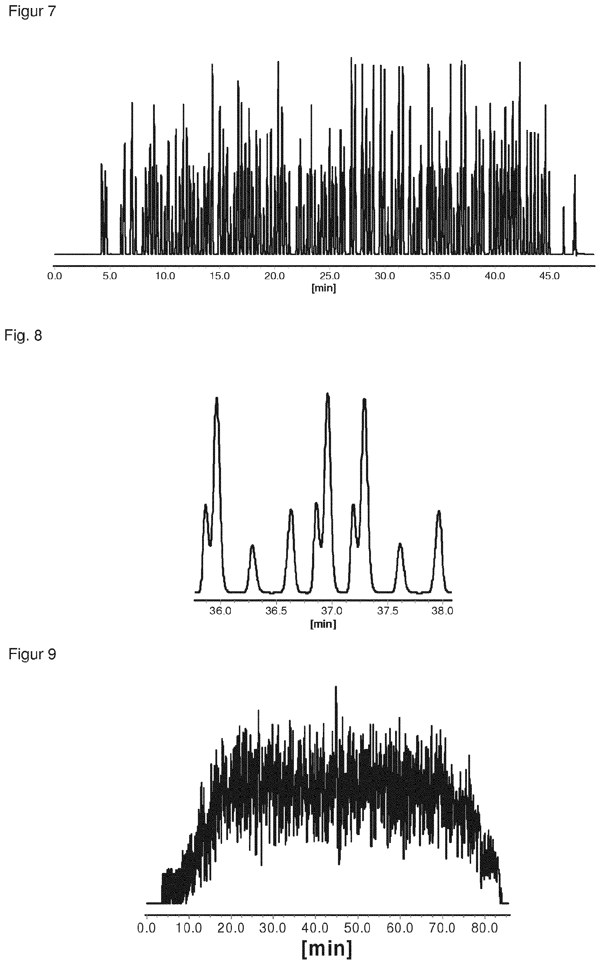

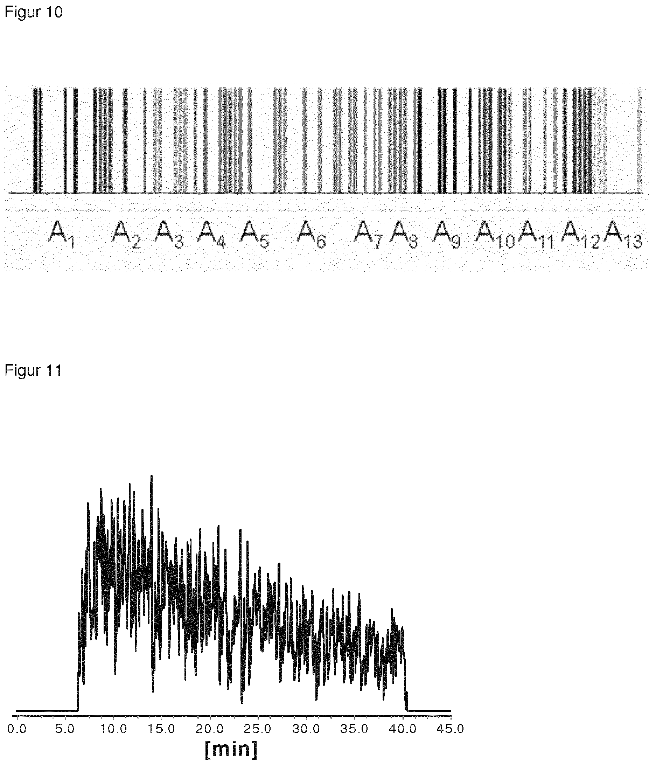

Fig. 7 und Fig. 9 zeigen jeweils ein Diagramm einer gemessenen Injektionsstabilität einer eindeutigen binären Sequenz eines gepulsten Stoffgemisches über der Zeit. Fig. 7 zeigt dabei die Injektionsstabilität über eine Zeitdauer von 50 min einer 7-bit Sequenz (entsprechend $2^7$=127 Elementen) mit einem Injektionsintervall von $\Delta t$ = 20 s, einer Pulsdauer von $\Delta t_{Puls}$ = 10 ms, bei einer 10 Hz Datenakquisition. Fig. 8 zeigt einen vergrößerten Ausschnitt des Diagramms nach Fig. 7. Anhand von Fig. 8 ist deutlich die Stabilität der Peakflächen von drei unterschiedlichen Stoffgemischen (Analyten) erkennbar. Fig. 10 zeigt die Injektionsstabilität bei kurzen Injektionsintervallen mit 1023 Injektionen in 34 min einer 11-bit Sequenz (entsprechend $2^{11}$=2048 Elementen) mit einem Injektionsintervall von $\Delta t$ = 1 s, einer Pulsdauer von $\Delta t_{Puls}$ = 2 ms, bei einer 10 Hz Datenakquisition.

Wie anhand der Figuren 7 bis 9 erkennbar erreichen ist mit den in den Fig. 1 bis 6 dargestellten Anordnungen eine außerordentlich gute Injektionsstabilität auch bei kurzen Injektionsintervallen, insbesondere Injektionsintervallen kleiner 400 ms, erzielbar. Dabei kann die Pulsdauer bei gleichbleibender Stabilität auch über das gesamte Injektionsintervall beibehalten werden ($\Delta t = \Delta t_{Puls}$).

Da die Pulsdauer gegenüber dem Injektionsintervall kurz gewählt werden kann, ist vorteilhafterweise eine Mehrfachinjektion innerhalb eines Injektionsintervalls möglich (Oversampling), wodurch der Durchsatz zu analysierender Stoffgemische (Probendurchsatz) weiter steigerbar ist.

Mit der in Fig. 5 und Fig. 6a bis 6c dargestellten Vorrichtung zur Erzeugung von gepulsten Stoffgemischen ist insbesondere im Zusammenhang mit der in Fig. 1 dargestellten Anordnung zur Analyse von Stoffgemischen eine Hochdurchsatzanalyse realisierbar. Dabei werden zu analysierende Stoffgemische (Analytproben) mit einer eindeutigen binären Sequenz kodiert. Die Kodierung der Analytproben erfolgt durch Injektion der Analyte gemäß einer binären Pseudozufallssequenz oder einer Zufallssequenz, die aus einer mit einer wiederholenden Sequenz unterteilten Pseudozufallssequenz besteht, die $2^n$-x Elemente aufweist (im Falle von Simplex- und Hadamardmatrizen ist x = 1). Dabei können die jeweiligen Injektionsabschnitte für die jeweiligen Analytproben unterschiedlich lang sein, um eine äquivalenten Informationsinhalt zu gewährleisten. Fig. 10 zeigt in einer schematischen Darstellung entsprechende Injektionsabschnitte für Proben A1 bis A13 innerhalb einer binären Pseudozufallssequenz. Die Injektionssequenz besteht aus der gleichen Anzahl der Elemente 0 und 1 bzw. die Anzahl kann um 1 differieren ($2^n$-1).

Die in Fig. 10 exemplarisch dargestellten Injektionsabschnitte der Proben A1 bis A13 können zudem in Kalibrier- und Messbereiche aufgeteilt werden, um eine kontinuierliche Quantifizierung mit innerer Standardisierung zu ermöglichen. Ein Element 1 in der binären Pseudozufallssequenz stellt dabei eine Injektion in Form eines einen Injektionsstoßes dar. Bei ein Elementen 0 findet keine Injektion statt. Die jeweiligen Elemente können zudem noch aufgeteilt werden in Untermodulationssequenzen, die für alle Elemente gleich aufgebaut sind, vorteilhafterweise um Mehrfachinjektionen (Oversampling) zu ermöglichen beziehungsweise zu gewährleisten.

Jedes zu analysierende Stoffgemisch (Probe) wird während der Analyse vorteilhafterweise mehrfach hintereinander injiziert, um eine Quantifizierung der jeweiligen Komponenten zu ermöglichen. Die minimale Anzahl benötigter Injektionen zur eindeutigen Identifizierung und Quantifizierung der einzelnen Analyte in einer Mischung ist dabei mit den folgenden charakteristische Größen bestimmbar:

Anzahl der Proben: $i_{max}$

Anzahl der Analyte in einer Probe: $k_{max}$

Anzahl der Zeitintervalle $\Delta t$ [s] aus der Modulationssequenz der Länge n:

$$N = 2^n - 1$$

Datenakquisitionsfrequenz und oder Injektionsfrequenz (Oversampling) pro Zeitintervall: $f_{OVR}$
Maximale Retentionszeit: $t^{max}_{R[min]}$

Maximale Anzahl analysierbarer Proben:

$$i_{max} = \frac{\left( N + \dfrac{t_R^{max}}{60\Delta t} \right)}{k_{max}} f_{OVR}$$

Anzahl notwendiger Wiederholungsinjektionen pro Probe:

$$n_{Injektionen} = \frac{N}{2 \cdot i_{max}} = \frac{N \cdot k_{max}}{2\left( N + \dfrac{t_R^{max}}{60\Delta t} \right) f_{OVR}}$$

Gesamtanalysendauer:

$$t_{Analysendauer} = \frac{\dfrac{N \cdot \Delta t}{60} + t_R^{max}}{i_{max}}$$

Probendurchsatz:

$$P = \frac{i_{max}}{t_{Analysendauer}} = \frac{i_{max}^2}{\left( \dfrac{N \cdot \Delta t}{60} + t_R^{max} \right)} = \frac{\left( N + \dfrac{t_R^{max}}{60\Delta t} \right) \cdot i_{max}}{k_{max}\left( \dfrac{N \cdot \Delta t}{60} + t_R^{max} \right)}$$

Mit den in Fig. 3 und Fig. 4a bis 4c dargestellten Vorrichtungen zur Erzeugung von gepulsten Stoffgemischen (Tieftemperaturmodulation) ist insbesondere im Zusammenhang mit der in Fig. 2 dargestellten Anordnung zur Analyse von Stoffgemischen eine hochauflösende Analyse realisierbar. Dabei wird ein zu analysierendes Stoffgemisch (Analytprobe) mit einer eindeutigen binären Sequenz kodiert. Die Kodierung der Analytprobe erfolgt durch Injektion (Vorrichtung gemäß Fig. 3 und Fig. 4a bis 4c) der Analytprobe gemäß einer binären Pseudozufallssequenz oder einer Zufallssequenz, die aus einer mit einer wiederholenden Sequenz unterteilten Pseudozufallssequenz besteht, die $2^n$-x Elemente aufweist (im Falle von Simplex- und Hadamardmatrizen ist x = 1). Die Injektionssequenz besteht aus der gleichen Anzahl der Elemente 0 und 1 beziehungsweise die Anzahl kann um 1 differieren ($2^n$-1). Im Falle eines Elements 1 wird eine Probe injiziert beziehungsweise durch den Heißluftjet freigesetzt. Im Falle eines Elements 0 erfolgt keine Injektion beziehungsweise ein Einfrieren durch den Kaltluftjet. Die Injektionsintervalle werden entsprechend der benötigten Zeit für einen sogenannten Vollscan oder eines Vielfachen der Dauer eines sogenannten Vollscans des Spektrometers gewählt. Der Scan (Erfassung) des Spektrometers und das Injektionsintervall werden dabei miteinander synchronisiert. Die Injektionspulsdauer beziehungsweise Modulationsdauer beim Tieftemperaturmodulator kann gleich oder kürzer als das Injektionsintervall beziehungsweise das Modulationsintervall gewählt werden. In jedem Injektionsintervall beziehungsweise Modulationsintervall können vorteilhafterweise auch mehrere unterschiedliche spektroskopische oder spektrometrische Experimente durchgeführt werden. Vorzugsweise erfolgt ein Massenvollscan und MS/MS bzw. $MS^n$-Experimente zur eindeutigen Identifizierung und Quantifizierung.

Fig. 11 zeigt in einem Diagramm die zeitliche graduelle Konzentrationsänderung eines zu analysierenden Stoffgemischs (Analyten) als von der Auswerteeinrichtung erfasstes Gesamtchromatogramm. Die entsprechenden Daten des Gesamtchromatogramms liegen seitens der Auswerteeinrichtung und/oder seitens einer mit dieser verbundenen Datenerfassungseinrichtung (vgl. Fig. 1 und Fig. 2) vor. Die Rohdaten werden für die weitere Auswertung mittels seitens einer Recheneinrichtung (Computer) der Auswerteeinrichtung insbesondere im Rahmen einer Dekonvolution zur weiteren Auswertung genutzt.

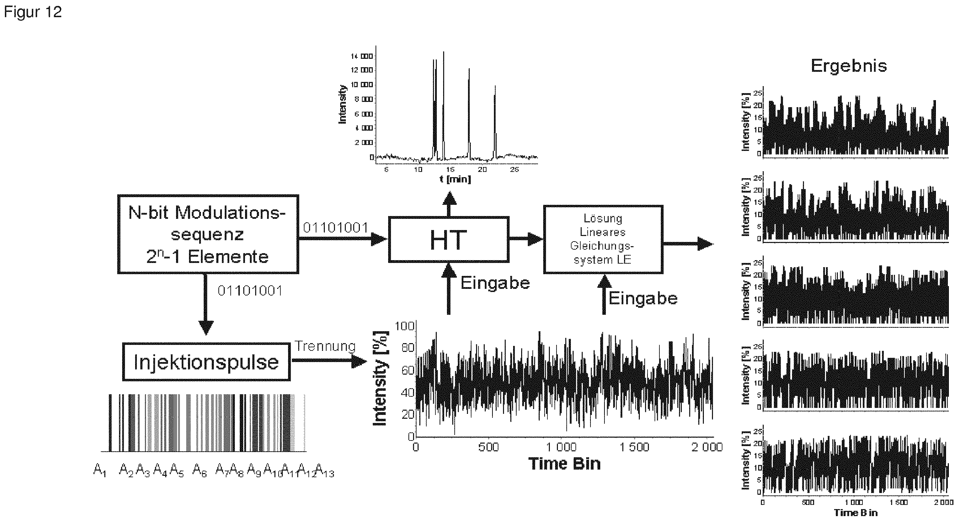

Der Ablauf der Analyse eines Stoffgemischs ist in Fig.12 symbolisch dargestellt. Die Auswertung der Analyse erfolgt unter Nutzung eines Dekonvolutionsverfahrens. Das Dekonvolutionsverfahren weist die folgenden drei Schritte auf:

1. Dekonvolution der Rohdaten mit der inversen Kodiermatrix, um das Gesamtchromatogramm zu erhalten;
2. Berechnung der relativen Konzentrationsverteilung der einzelnen Analyten aus Schritt 1 und Füllen der Konzentrationsverteilungsmatrix sowie des Konzentrationsvektors der einzelnen Analyten und
3. Lösung des linearen Gleichungssystem zur Ermittlung der Konzentrationen der einzelnen Analyte.

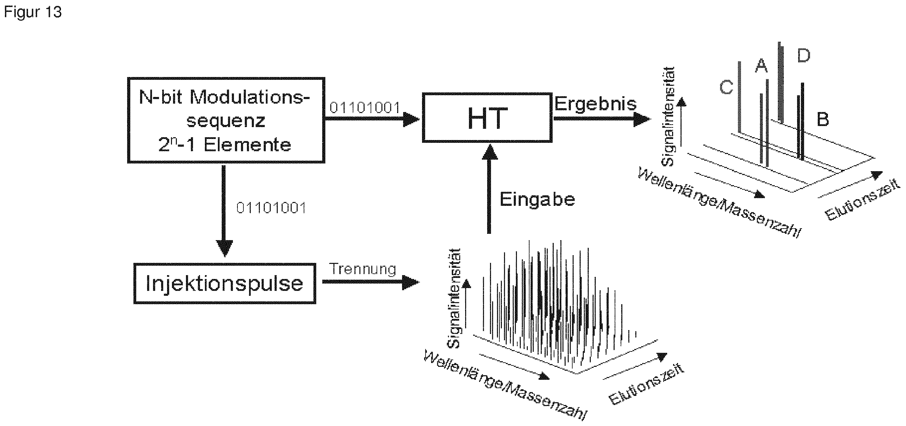

Durch die Modulation von n Analytinjektionen wird ein Gesamtchromatogramm (vgl. Fig. 11 und Fig. 12) erhalten, das eine Überlagerung von n Einzelchromatogrammen darstellt. Die direkte Multiplikation der Rohdaten in der zirkulären Darstellung (nach $2^n$-1 Zeitintervallen wird die Signalintensität zu den Vektorelementen am Anfang wieder hinzuaddiert) mit der inversen Hadamard-, Simplex- oder inversen Matrix der bekannten binären Pseudozufallssequenz ergibt das Gesamtchromatogramm (vgl. Fig. 13) der jeweiligen Analyten.

Aus dem Gesamtchromatogramm ergibt sich zum einen die Zahl kmax der unterschiedlichen Analyten in den jeweiligen Proben i und die jeweiligen Peakformen. Dabei wird mit den Ausgestaltungen des Analyseverfahrens eine sehr gute Auflösung der Peaks erzielt, so dass sich das Verfahren auch auf Fragestellungen mit kleinen Trennfaktoren, wie die beispielsweise bei Enantiomerentrennungen zur Bestimmung des Enantiomerenüberschusses ee auftreten, anwenden lässt.

Da die Hadamardtransformation keine Analytschwankungen berücksichtigen kann, ist dieses Gesamtchromatogramm (vgl. Fig. 12) durch Abweichungen in der Basislinie charakterisiert, die allerdings wiederum eine Konvolution der jeweiligen Analytkonzentrationen darstellt. Daher wird zunächst wird eine Peakformanalyse durchgeführt, um die Verteilungsfunktion $\Psi(A_k)$ der jeweiligen Analyte in Abhängigkeit der Zeit zu erhalten. Dabei wird das Maximum jedes einzelnen Analytpeaks auf 1 normiert. Damit wird anschließend die Konzentrationsverteilungsmatrix gefüllt und zwar in der Art und Weise, dass in jeder Spalte die Relativkonzentration $\Psi(A_{i,j,k})$ des Analyten $A_k$ der i-ten Probe und j-ten Wiederholungsinjektion in Abhängigkeit der Injektionssequenz und des Zeitintervalls $\Delta t$ wie folgt steht:

$$Chromatogramm = ij \sum_{k=1}^{k_{max}} \Psi(A_k)$$

$$= \begin{bmatrix} \Psi(A_1(1)) & \Psi(A_2(1)) & \Psi(A_3(1)) & \cdot & \cdot & \cdot & & \Psi(A_k(1)) \\ \Psi(A_1(2)) & \Psi(A_2(2)) & \Psi(A_3(2)) & & & & \cdot \\ \Psi(A_1(3)) & \Psi(A_2(3)) & \Psi(A_3(3)) & & & & \cdot \\ \cdot & & & \cdot & & & \cdot \\ \cdot & & & & \cdot & & \cdot \\ \cdot & & & & \Psi(A_{k-2}(t-2)) & \Psi(A_{k-1}(t-2)) & \Psi(A_k(t-2)) \\ \cdot & & & & \Psi(A_{k-2}(t-1)) & \Psi(A_{k-1}(t-1)) & \Psi(A_k(t-1)) \\ \Psi(A_1(t)) & \cdot & \cdot & \cdot & \Psi(A_{k-2}(t)) & \Psi(A_{k-1}(t)) & \Psi(A_k(t)) \end{bmatrix} \begin{bmatrix} A_{1,1,1} \\ A_{i,1,1} \\ A_{1,2,1} \\ A_{i,j,1} \\ A_{1,1,2} \\ A_{i,1,2} \\ A_{i,j,2} \\ A_{i,j,k} \end{bmatrix} = \begin{bmatrix} I_1 \\ \cdot \\ \cdot \\ \cdot \\ \cdot \\ \cdot \\ \cdot \\ I_t \end{bmatrix}$$

Jede Zeile stellt dabei die Summe der Relativkonzentrationen der jeweiligen Analyte in den Proben dar. Diese Vorgehensweise kann auf das Rohchromatogramm in der zirkulären und nicht-zirkulären Darstellung angewandt werden. Die jeweilige Konzentration der Analyte ergibt sich als Konzentrationsvektor, der mit der Konzentrationsverteilungmatrix multipliziert die Signalintensitäten in jedem Zeitintervall des Rohchromatogramms ergibt. Damit erhält man ein lineares Gleichungssystem in Matrixdarstellung, das durch iteratives Eliminieren von Variablen oder durch Anwendung der Gauß-Jordan Methode gelöst werden kann.

Die Lösung ist die Konzentration der jeweiligen Analyte in den Proben i. Zur Optimierung, Überprüfung und Beurteilung der Qualität der so erhalten Lösung des Gleichungssystem wird das Rohchromatogramm mittels iterativer Anpassung mit dem Konzentrationsvektor (durch Bildung der Differenz oder durch Division) und anschließender Hadamard-Transformation in ein Gesamtchromatogramm überführt, dessen Abweichungen in der Basislinie durch weitere Feinabstimmungsschritte bei der Lösung des linearen Gleichungssystems minimiert werden.

Fig. 12 zeigt auf der rechten Seite die Konzentration der Analyte der jeweiligen Proben in einer zirkulären Darstellung. Durch zirkuläre Verschiebung gemäß der binären Pseudozufallssequenz und dem jeweiligen Zeitintervall werden die Konzentrationen der Analyte in den einzelnen Proben erhalten. Diese Konzentrationsdaten können mit weitere in Absolutkonzentrationen oder Relativkonzentration, vorzugsweise durch Einsatz einer internen Standardisierung, weiter verarbeitet werden.

Anhand des in dem Diagramm gemäß Fig. 13 exemplarisch dargestellten Ablaufs der Analyse eines Stoffgemischs ist die Nutzung einer zweidimensionalen Erfassung und Auswertung erkennbar. Bei dem dabei zum Einsatz kommenden Dekonvolutionsverfahren werden die Spektren des Stoffgemischs identifiziert. Das Dekonvolutionsverfahren weist die folgenden Schritte auf:

1. Extraktion der jeweiligen Wellenzahl oder Masse/Ladungs-Verhältnisses aus allen von der Auswerteeinrichtung detektierten Spektren und
2. Hadamard-Transformation mit der bekannten Pseudozufallssequenz.

Daraus ergeben sich zu den jeweiligen Peaks im konventionellen Chromatogramm die Spektren, mit verbessertem Signal-zu-Rausch-Verhältnis (SNR) und verkürzten Analysedauern.

Die in den Figuren der Zeichnung dargestellten Ausführungsbeispiele der Erfindung dienen lediglich der Erläuterung der Erfindung und sind für diese nicht beschränkend.

## Patentansprüche

**1.** Verfahren zur Erzeugung von gepulsten Stoffgemischen, insbesondere komplexen chemischen und/oder biochemischen Stoffgemischen, **dadurch gekennzeichnet, dass** wenigstens ein Stoffgemisch über wenigstens zwei Kapillarleitungen wenigstens zwei Kanälen kontinuierlich zugeführt wird, das Stoffgemisch in wenigstens einem in den wenigstens zwei Kanälen angeordneten desaktivierten Glasrohr verdampft wird, die wenigstens zwei Kanäle über ein jeweiliges schaltbares Druckventil mit einer Gasströmung beaufschlagt werden und mit der Gasströmung beaufschlagtes verdampftes Stoffgemisch aus den wenigstens zwei Kanälen in eine Nadel injiziert wird, wobei die jeweiligen schaltbaren Druckventile der Kanäle synchron und/oder separat voneinander gesteuert werden.

**2.** Verfahren nach Anspruch 1, **dadurch gekennzeichnet, dass** das jeweilige schaltbare Druckventil mit Pulsen einer eindeutigen binären Sequenz geschaltet wird.

**3.** Verfahren nach Anspruch 1 oder Anspruch 2, **gekennzeichnet durch** Schaltzeiten des jeweiligen schaltbaren Druckventils in einem Bereich von etwa 1 ms bis etwa 1 s, vorzugsweise in einem Bereich von etwa 1 ms bis etwa 10 ms.

**4.** Verfahren nach einem der Ansprüche 1 bis 3, **gekennzeichnet durch** eine Beaufschlagung des verdampften Stoffgemisches mit einer Veränderungen der Zusammensetzung des verdampften Stoffgemisches ausschließenden Gasströmung eines Gases und/oder eines Gasgemisches.

**5.** Verfahren nach einem der Ansprüche 1 bis 4, **dadurch gekennzeichnet, dass** die wenigstens zwei Kanäle und/oder die Nadel durch Beaufschlagung mit der Gasströmung gespült wird, vorzugsweise gesteuert über das jeweilige schaltbare Druckventil des Kanals.

**6.** Verfahren nach einem der Ansprüche 1 bis 5, **dadurch gekennzeichnet, dass** die Verdampfung des Stoffgemisches gesteuert wird, vorzugsweise durch Steuerung der Temperatur einer Heizeinrichtung zur Verdampfung des Stoffgemisches.

7. Verfahren nach einem der Ansprüche 1 bis 6, **dadurch gekennzeichnet, dass** der Druck der Gasströmung gesteuert wird.

8. Verfahren nach einem der Ansprüche 1 bis 7, das mit einem Verfahren zur Analyse von Stoffgemischen, insbesondere von komplexen chemischen und/oder biochemischen Stoffgemischen, bei welchem ein zu analysierendes Stoffgemisch einer Trenneinrichtung zugeführt wird, durch chemisch und/oder physikalisch bewirkten Transport die Stoffe des zu analysierenden Stoffgemisches seitens der Trenneinrichtung voneinander getrennt werden und die voneinander getrennten Stoffe seitens einer Auswerteeinrichtung erfasst werden, wobei das zu analysierende Stoffgemisch über die Nadel der Trenneinrichtung in Pulsen einer eindeutigen binären Sequenz zugeführt wird, kombiniert wird.

9. Vorrichtung zur Erzeugung von gepulsten Stoffgemischen, insbesondere komplexen chemischen und/oder biochemischen Stoffgemischen, **gekennz eichnet durch** wenigstens zwei Kanäle mit jeweils einer Kapillarleitung zur Zuführung wenigstens eines Stoffgemisches in die wenigstens zwei Kanäle, mit wenigstens einem in den wenigstens zwei Kanälen angeordneten desaktivierten Glasrohr zur Verdampfung des wenigstens einen den wenigstens zwei Kanälen zugeführten Stoffgemisches im Kanal mit einer Heizeinrichtung und mit einem jeweiligen schaltbaren Druckventil zum Anschluss des Kanals an eine Gaszuleitung zur Beaufschlagung des wenigstens einen verdampften Stoffgemisches mit einer Gasströmung, und einem sich an den wenigstens zwei Kanälen strömungstechnisch anschließenden Ausgang zum Anschluss einer Gasableitung, vorzugsweise einer Injektionsnadel.

10. Vorrichtung nach Anspruch 9, **dadurch gekennzeichnet, dass** die Einstromrichtung der Gasströmung zur Beaufschlagung des wenigstens einen verdampften Stoffgemisches über das jeweilige schaltbare Druckventil zur Längserstreckungsrichtung des Kanals einen Winkel in einem Bereich von etwa 0° bis etwa 180° einnimmt, vorzugsweise im Wesentlichen senkrecht zur Längserstreckungsrichtung verläuft.

11. Vorrichtung nach Anspruch 9 oder Anspruch 10, **dadurch gekennzeichnet, dass** die Gaszuleitung über das jeweilige schaltbare Druckventil etwa mittig der Längserstreckungsrichtung des Kanals an den Kanal anschließbar ist.

12. Vorrichtung nach einem der Ansprüche 9 bis 11, **dadurch gekennzeichnet, dass** die Heizeinrichtung zumindest im Bereich des in den wenigstens zwei Kanälen angeordneten desaktivierten Glasrohrs angeordnet ist, wobei die Heizeinrichtung vorzugsweise in Form einer austauschbar anordbaren Heizkartusche ausgebildet ist.

13. Vorrichtung nach einem der Ansprüche 9 bis 12, **gekennzeichnet durch** wenigstens ein Sensorikelement zur Erfassung der Temperatur der Heizeinrichtung und/oder der Verdampfung, wobei die erfasste Temperatur vorzugsweise zur Steuerung der Heizeinrichtung nutzbar ist.

14. Vorrichtung nach einem der Ansprüche 9 bis 13, **dadurch gekennzeichnet, dass** das Druckventil mit Schaltzeiten in einem Bereich von etwa 1 ms bis etwa 1 s, vorzugsweise in einem Bereich von etwa 1 ms bis etwa 10 ms, schaltbar ist.

15. Vorrichtung nach einem der Ansprüche 9 bis 14, **dadurch gekennzeichnet, dass** die wenigstens eine Kapillarleitung aus Metall, Glas und/oder Fused-Silica-Glas ist.

16. Vorrichtung nach einem der Ansprüche 9 bis 15, **dadurch gekennzeichnet, dass** diese aus Metall und/oder einer metallischen Legierung gefertigt ist.

17. Vorrichtung nach einem der Ansprüche 9 bis 16, **dadurch gekennzeichnet, dass** diese zur Nutzung eines Verfahrens nach einem der Ansprüche 1 bis 8 ausgebildet ist.

## Claims

1. A method for producing pulsed substance mixtures, particularly complex chemical and/or biochemical substance mixtures, **characterised in that** at least one substance mixture is fed continuously to at least two channels via at least two capillary lines, the substance mixture is evaporated in at least one deactivated glass tube arranged in the at least two channels, the at least two channels are charged with a gas flow via a respective switchable pressure valve, and a vaporised substance mixture charged with the gas flow is injected from the at last two channels into a needle, wherein the at least two respective switchable pressure valves of the channels are controlled synchronously and/or separately from one another.

2.  The method according to claim 1, **characterised in that** the respective switchable pressure valve is switched with pulses of a unique binary sequence.

3.  The method according to claim 1 or 2, **characterised by** the switching times of the respective switchable pressure valve in a range from about 1 ms to about 1 s, preferably in a range from about 1 ms to about 10 ms.

4.  The method according to any one of claims 1 to 3, **characterised by** a charging of the vaporised substance mixture with a gas flow of a gas and/or a gas mixture that precludes changes in the composition of the vaporised substance mixture.

5.  The method according to any one of claims 1 to 4, **characterised in that** the at least two channels and/or the needle is flushed by charging with the gas flow, preferably in controlled manner via the respective switchable pressure valve of the channel.

6.  The method according to any one of claims 1 to 5, **characterised in that** the vaporisation of the substance mixture is controlled, preferably by controlling the temperature of a heating device for vaporising the substance mixture.

7.  The method according to any one of claims 1 to 6, **characterised in that** the pressure of the gas flow is controlled.

8.  The method according to any one of claims 1 to 7, which is combined with a method for analysing substance mixtures, particularly complex chemical and/or biochemical substance mixtures, in which a substance mixture to be analysed is introduced into a separating device, the substances of the substance mixture to be analysed are separated from each other by the separating device under the effects of chemically and/or physically induced transport, and the substances that have been separated from each other are detected by an evaluation device, wherein the substance mixture to be analysed is fed to the separating device through the needle in pulses of a unique binary sequence.

9.  A device for generating pulsed substance mixtures, particularly complex chemical and/or biochemical substance mixtures, **characterised by** at least two channels, each having one capillary line for introducing at least one substance mixture into the at least two channels, with at least one deactivated glass tube arranged in the at least two channels for vaporising the at least one substance mixture fed to the at least two channels in the channel with a heating device and with a respective switchable pressure valve for connecting the channel to a gas feed line for charging the at least one vaporised substance mixture with a gas flow, and an outlet at the downstream end of the at least two channels in the flow direction for connecting to a gas discharge, preferably an injection needle.

10.  The device according to claim 9, **characterised in that** the inflow direction of the gas flow for charging the at least one vaporised substance mixture is directed at an angle in the range from about 0° to about 180° relative to the longitudinal extension direction of the channel, preferably substantially at right angles to the longitudinal extension direction thereof via the respective switchable pressure valve.

11.  The device according to claim 9 or 10, **characterised in that** the gas feed line can be connected to the channel via the respective switchable pressure valve approximately in the middle of the longitudinal extension direction of the channel.

12.  The device according to any one of claims 9 to 11, **characterised in that** the heating device is arranged at least close to the deactivated glass tube arranged in the at least two channels, wherein the heating device is preferably constructed in the form of a replaceably mountable heater cartridge.

13.  The device according to any one of claims 9 to 12, **characterised by** at least one sensor system element for detecting the temperature of the heating device and/or the vaporisation, wherein the detected temperature is preferably usable for controlling the heating device.

14.  The device according to any one of claims 9 to 13, **characterised in that** the pressure valve is switchable with switching times in a range from about 1 ms to about 1 s, preferably in a range from about 1 ms to about 10 ms.

**15.** The device according to any one of claims 9 to 14, **characterised in that** the at least one capillary line is made from metal, glass and/or fused silica glass.

**16.** The device according to any one of claims 9 to 15, **characterised in that** said device is produced from metal and/or a metal alloy.

**17.** The device according to any one of claims 9 to 16, **characterised in that** said device is designed for use in a method according to any one of claims 1 to 8.

**Revendications**

**1.** Procédé de fabrication de mélanges pulsés de substances, en particulier de mélanges complexe de substances chimiques et/ou biochimiques, **caractérisé en ce qu'**au moins un mélange de substances est acheminé en continu par au moins deux conduites capillaires vers au moins deux canaux, que le mélange de substances est vaporisé dans au moins un tube en verre désactivé disposé dans les au moins deux canaux, que les au moins deux canaux sont sollicités par l'intermédiaire d'une soupape de pression respective commutable avec un écoulement gazeux et que le mélange de substances évaporé sollicité avec l'écoulement gazeux provenant des au moins deux canaux est injecté dans une aiguille, les soupapes de pression commutables respectives des canaux étant contrôlées de manière synchrone et/ou séparément les unes des autres.

**2.** Procédé selon la revendication1, **caractérisé en ce que** la soupape de pression commutable respective est commutée avec des impulsions d'une séquence binaire sans équivoque.

**3.** Procédé selon la revendication 1 ou 2, **caractérisé par** des temps de commutation de la soupape de pression commutable respective de l'ordre d'environ 1 ms à environ 1 s, de préférence de l'ordre d'environ 1 ms à environ 10 ms.

**4.** Procédé selon une des revendications 1 à 3, **caractérisé par** une sollicitation du mélange évaporé de substances avec un écoulement gazeux d'un gaz et/ou d'un mélange de gaz excluant des modifications de la composition du mélange évaporé de substances.

**5.** Procédé selon une des revendications 1 à 4, **caractérisé en ce que** les au moins deux canaux et/ou l'aiguille sont lavés par sollicitation avec l'écoulement gazeux, de préférence sous le contrôle de la soupape de pression commutable respective du canal.

**6.** Procédé selon une des revendications 1 à 5, **caractérisé en ce que** l'évaporation du mélange de substances est contrôlée, de préférence par commande de la température d'un dispositif de chauffage pour l'évaporation du mélange de substances.

**7.** Procédé selon une des revendications 1 à 6, **caractérisé en ce que** la pression de l'écoulement gazeux est contrôlée.

**8.** Procédé selon une des revendications 1 à 7, qui est combiné avec un procédé d'analyse de mélange de substances, en particulier de mélanges complexes de substances chimiques et/ou biochimiques, dans lequel un mélange de substances à analyser est acheminé vers un dispositif séparateur, les substances du mélange de substances à analyser sont séparées les unes des autres par un transport provoqué chimiquement et/ou physiquement par le dispositif séparateur et les substances séparées les unes des autres sont enregistrées par un dispositif d'exploitation, le mélange de substances à analyser étant acheminé par l'intermédiaire de l'aiguille du dispositif séparateur par des impulsions d'une séquence binaire sans équivoque.

**9.** Dispositif de fabrication de mélanges pulsés de substances, en particulier de mélanges complexes de substances chimiques et/ou biochimiques, **caractérisé par** au moins deux canaux comportant respectivement une conduite capillaire pour l'acheminement d'au moins un mélange de substances dans les au moins deux canaux, au moins un tube en verre désactivé disposé dans les au moins deux canaux pour évaporer l'au moins un mélange de substances acheminé vers les au moins deux canaux dans le canal au moyen d'un dispositif de chauffage et une soupape de pression commutable respective pour raccorder le canal à une conduite de gaz pour solliciter l'au moins un mélange vaporisé de substances avec un écoulement gazeux et une sortie se raccordant au niveau technique d'écoulement à au moins deux canaux pour le raccordement d'une conduite d'évacuation de gaz, de préférence une aiguille d'injection.

**10.** Dispositif selon la revendication 9, **caractérisé en ce que** le sens d'afflux de l'écoulement gazeux pour la sollicitation de l'au moins un mélange évaporé de substances par l'intermédiaire de la soupape de pression commutable respective décrit par rapport au sens d'extension longitudinale du canal un angle de l'ordre d'environ 0° à environ 180°, et s'étend de préférence sensiblement à la perpendiculaire du sens d'extension longitudinale.

**11.** Dispositif selon la revendication 9 ou 10, **caractérisé en ce que** la conduite d'alimentation en gaz peut être raccordée au canal par l'intermédiaire de la soupape de pression commutable respective approximativement au milieu du sens d'extension longitudinale du canal.

**12.** Dispositif selon une des revendications 9 à 11, **caractérisé en ce que** le dispositif de chauffage est disposé au moins au niveau du tube en verre désactivé disposé dans les au moins deux canaux, le dispositif de chauffage étant réalisé de préférence sous forme d'une cartouche de chauffage pouvant être disposée de manière à pouvoir être échangée.

**13.** Dispositif selon une des revendications 9 à 12, **caractérisé par** au moins un élément de détection pour détecter la température du dispositif de chauffage et/ou de l'évaporation, la température détectée étant de préférence utilisable pour contrôler le dispositif de chauffage.

**14.** Dispositif selon une des revendications 9 à 13, **caractérisé en ce que** la soupape de pression est commutable avec des temps de commutation de l'ordre d'environ 1 ms à environ 1 s, de préférence de l'ordre d'environ 1 ms à environ 10 ms.

**15.** Dispositif selon une des revendications 9 à 14, **caractérisée en ce que** l'au moins une conduite capillaire est en métal, en verre et/ou en verre de silice fondu.

**16.** Dispositif selon une des revendications 9 à 15, **caractérisé en ce qu'**il est fabriqué en métal et/ou en alliage métallique.

**17.** Dispositif selon une des revendications 9 à 16, **caractérisé en ce qu'**il est conçu pour l'utilisation d'un procédé selon une des revendications 1 à 8.

**Figur 1**

**Figur 2  Kontinuierl. Probeninjektion**

Figur 3

Druckventil → Split-Ventil

Probenkapillare

inerter Glaseinsatz

Heizkartuschen

beheizter Block

Probenverdampfungsraum

Injektionsnadel

Fig. 4a

(7.81)
(6.90)
(10)
(30°)
(50)
(61.34)
(70)
(8.50)
(6.50)

⌀6 Durchbohren
⌀6.50⍒50
⌀8.50 Durchbohren
(⌀50)
(10)
(50)
(6.45)

Fig. 4b

(TRUE R0.50)
⌀10⍒17.99
(8.66)
(6.50)
(50)
(1.50)
(50)

Fig. 4c

Figur 5

Splitausgang

Probenport

Ventil

Ventil

Probenkapillaren

inerte Glaseinsätze

beheizter Block

Injektionsnadel

Fig. 6a

Injektionskanal

NPT 1/16"

Multiportblock

Gaszuleitung für Ventilanschluss

Bohrung für
Temperaturkontrolle

Bohrung für Heizkartusche

Fig. 6b

Fig. 6c

Figur 7

Fig. 8

Figur 9

Figur 10

$A_1$  $A_2$ $A_3$ $A_4$ $A_5$  $A_6$  $A_7$ $A_8$ $A_9$ $A_{10}$ $A_{11}$ $A_{12}$ $A_{13}$

Figur 11

[min]

Figur 12

EP 2 042 863 B1

Figur 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3001425 A1

- US 20040144918 A1